# EUROPEAN PATENT SPECIFICATION

(11) **EP 3 953 537 B1**
(45) Date of publication and mention of the grant of the patent: **22.07.2026**
(21) Application number: 20788650.8
(22) Date of filing: 06.04.2020
(51) Int. Cl.: E04B 1/98, E04B 1/61, E04B 1/74, F16F 15/02, E04H 9/02, F16F 15/04, F16F 15/06, F16F 15/08, E04B 1/82

(54) **A DEVICE FOR MOUNTING OF BEAM LAYOUTS**
VORRICHTUNG ZUR MONTAGE VON STRAHLENANORDNUNGEN
DISPOSITIF DE MONTAGE D'AGENCEMENTS DE POUTRE

(30) Priority: 08.04.2019 SE 1950439
(43) Date of publication of application: 16.02.2022
(73) Proprietor: Masonite Beams AB, 914 29 Rundvik (SE)
(72) Inventor: PERSSON, Tommy, 914 91 Nordmaling (SE); WIKNER, Alfred, 906 56 Umeå (SE)
(74) Representative: Zacco Sweden AB
(86) International application number: PCT/SE2020/050356
(87) International publication number: WO 2020/209775

(56) References cited:
- CN-A- 109 339 321
- CN-U- 207 296 018
- JP-A- 2002 201 737
- JP-A- 2002 201 820
- JP-A- 2015 209 649
- JP-A- H05 321 351
- JP-A- H09 235 908
- JP-A- H11 293 811
- US-A1- 2017 261 130

## Description

### TECHNICAL FIELD

The present invention relates to a sound damping building comprised of stacked wall blocks and a beam layout.

### BACKGROUND

A beam layout is a supporting construction part, which from either the top or the bottom side, or both, delimits different storeys in a building.

The term beam layout occurs in many different combinations depending on its field of application and material. Examples of beam layout named after the material is wood beam layout and concrete beam layout. Examples of beam layout named after their function are floor beam layout, roof beam layout, storey beam layout and farm beam layout. A common method in house construction involves the use of building blocks or building elements, such as wall blocks, floor blocks and beam layout blocks. The various blocks comprise a framework of bars, which are covered by a building plate or plaster plate on both sides in such a manner that a box is formed. The bars can be of solid wood, but can also comprise a kind of lightweight bar or lightweight beam. The lightweight beam comprises an oblong plate of building board, which at its long sides is provided with square bars of wood, an example of this is described in the Swedish application SE 0700202-5. This results in a bar that is lighter than a solid wooden bar, but with the same strength. The wall block plate covering the box constructed of the bars can comprise plaster, chipboard, OSB, plywood or similar board. The choice of plate is determined by the required strength as well as whether the plate is to form part of an external wall or an internal wall. If it relates to an exterior wall, this is provided with, for example, a wooden panel outside the board in the known way, and if it relates to an internal wall, this is provided with, for example, plaster plates on the outside of the board for the final finish. Before the plates are mounted on the framework, insulation can be placed between the bars, both as heat insulation and sound insulation. The beam layout element or the beam layout block is constructed in the same way as the wall block, but one of its upward facing building plate constitutes the floor plate and its downward facing building plate constitutes the ceiling.

The building elements can in a simple way quickly be mounted together to a building or a building module, also referred to as volume. A building module for example refers to a living room, which is completed before it is transported as a box or volume to the site, on which the building is to be constructed, whereafter several modules are mounted together to form a building. The advantage of using building elements is that they can be manufactured in a controlled indoor environment, which provides a damp-proof manufacturing with minimized risk of damage to insulation and building plates due to rain or snow. Wall blocks are for example manufactured with a width of between 1200 mm and 2400 mm and beam layouts with a width between 1200 mm and 2400 mm. The length of the beam layout element can be up to 10000 mm, but it should be noted that the length and the width can exceed these measures.

The building or volume is mounted by the beam layout elements and wall blocks being set up and connected at the edges and corners of the block. The beam layout element constitutes both the roof of a lower storey and the floor of an upper storey at the same time. A common way of building multi-storey houses is that the first storey is built according to the description above, whereafter the next layer or storey of wall blocks is set up on sound-absorbing bands or strips that are placed on the beam layout according to its edges. When these wall blocks are mounted together, a new layer of beam layout is placed on top of these walls. The connection or locking between the wall block and the beam layout can be established with studs. The studs are mounted at the edges of the beam layout, and the wall blocks are arranged with recesses or depressions for receiving the studs or vice versa. When the studs are placed in the recesses, the walls and the beam layout are locked against lateral movements.

The disadvantage of this method is that the more storeys to be built, the stronger forces affect the sound-absorbing bands. Finally, the sound insulation is squeezed together so much that its sound-absorbing effect is reduced. Yet another disadvantage of this method is if a strong pressure surge occurs at a lower storey level, for example in the event of an explosion. Such pressure surge can lift a beam layout somewhat, which may imply that the studs come out of the recess, which may cause the building to collapse.

A way of avoiding this is to mount the beam layout with hooks or corbels that are hung on the edges of the wall block, on the interior side of the wall block or on a bearer, an example of this is described in the Swedish application number SE0700202-5. When the beam layout is to be hung up, a sound-absorbing material is placed in the recesses arranged at the edge of the wall block. The hooks or corbels are fastened by screws in at the edge and/or bottom side of the beam layout. The beam layout is lifted in place with the corbels in the recesses. When the beam layout is in place, the wall block of the next storey can be placed on the edge of the previously arranged wall blocks, whereafter the method is repeated.

JP 2002 201820 A relates to an anti-seismic strengthening of a foundation for a building consisting of stacked building elements. The anti-seismic reinforcement includes a resilient construction which is arranged to hold the building together by pre-stressing the stacked building elements (columns/foundations) against each other with spring force.

From US 2017/261130 A1 is known a telescopable spring support. JP H05 321351 A discloses a further example of a building comprising a vibration damping system.

### SUMMARY OF THE INVENTION

The object of the invention is to achieve a sound damping building comprised of stacked wall blocks and a beam layout. According to the invention is used a device that offers a sound-damping/vibration-damping mounting of beam layouts in construction of a building. The device is intended to be placed between the building elements, whereby sound, which may arise from vibrations in the form of music, voices, steps or the like, can be limited or entirely removed.

The invention is defined by the appended claims.

### DESCRIPTION OF FIGURES

Fig. 1A shows and describes various types of building elements
Fig. 1B shows and describes an example of a vibration-damping device
Figs 2A-2D show further examples of vibration-damping devices, and
Figs 3A-3D show examples of various types of vibration-damping devices

### DESCRIPTION OF EMBODIMENTS

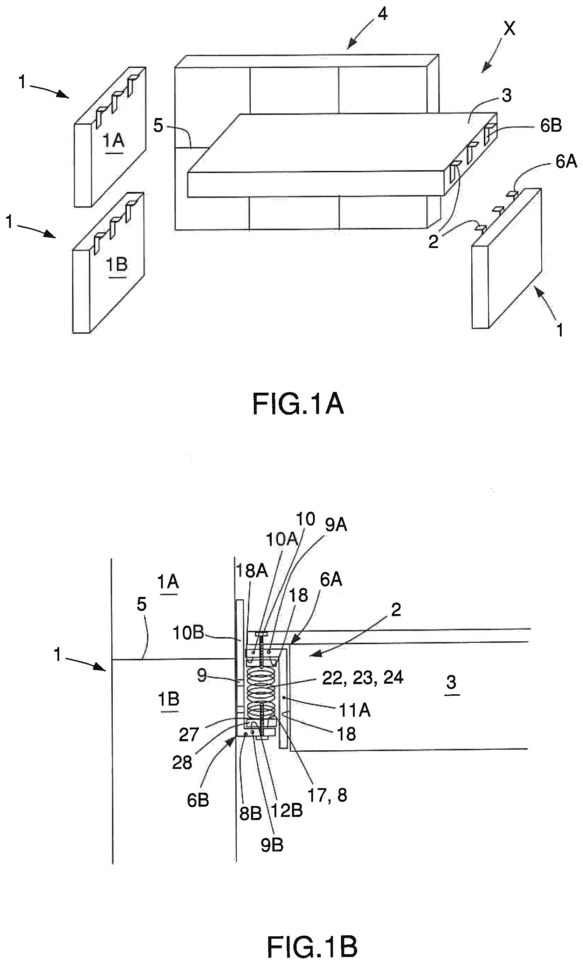

The building construction shown in Fig. 1A comprises a first and a second building element X in the form of a wall block 1, the vibration-damping device 2 as well as a building element in the form of a beam layout 3. The wall blocks 1 are stacked on each other with their end edges against each other, forming a wall 4. In connection with the a joint 5 between the wall blocks 1A, 1B, a building element is placed in the form of a beam layout 3.

In an embodiment, the vibration-damping device 2 according to Fig. 1B is placed on a second corbel 6B in the form of a bracket. A second corbel portion 10B is fixedly mounted on the wall block 1, in connection with the joint 5 between two wall blocks 1A, 1B. The second corbel 6B is configured with said one portion 10B directed in parallel with the wall 1 and another portion 9B directed in parallel with the beam layout 3. The second corbel portion 10B that is parallel to the wall 1 is provided with screw holes 9 through which the second corbel 6B can be fastened with screws in the wall 1. The one portion 9B that is parallel to the beam layout 3 constitutes attachment for the vibration-damping device 2. Furthermore, the vibration-damping device 2 is provided with an attachment 10 with which the beam layout 3 can be attached to the vibration-damping portion 2.

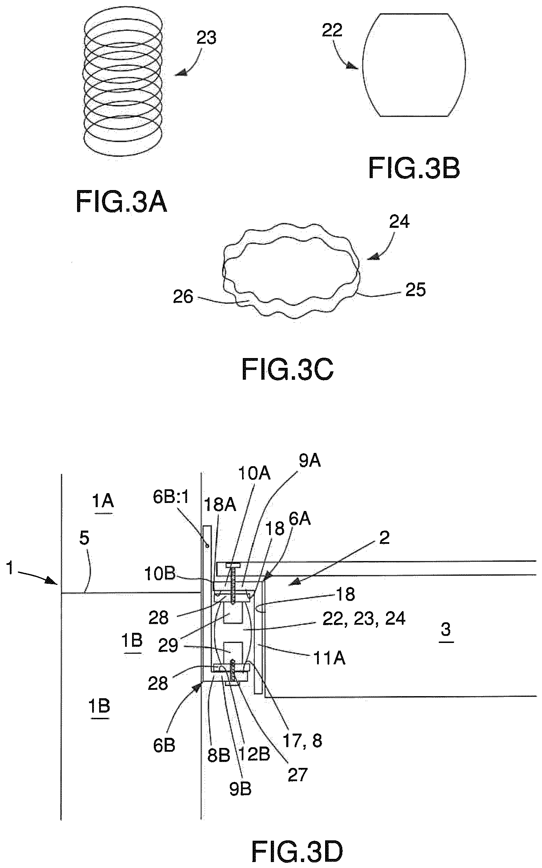

In Fig. 3D, the second corbel 6B comprises a portion 6B:1, which at mounting extends past the joint 5 between two wall blocks 1A, 1B. The second corbel 6B is advantageously mounted, before the next wall block 1B, in the row of wall blocks placed on each other, is to be mounted on the first wall block's 1A end portion 11. In this manner, the second corbel 6B forms an aligning means for the next wall block 1B, by the wall block's surface 12 being placed against the corbel portion 6B:1 Thus, the mounting of the wall block is facilitated.

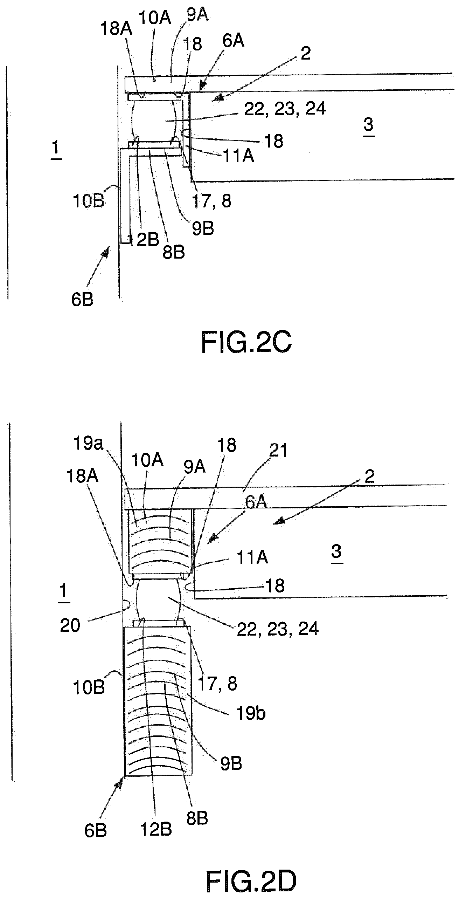

In another embodiment according to Fig. 2C, the vibration-damping device's 2 attachment comprises a first corbel 6A, with a portion 8 in parallel with the beam layout 3 and a second portion 18 in parallel with the wall 1, but extending along the beam layout's 3 end edge or short side.

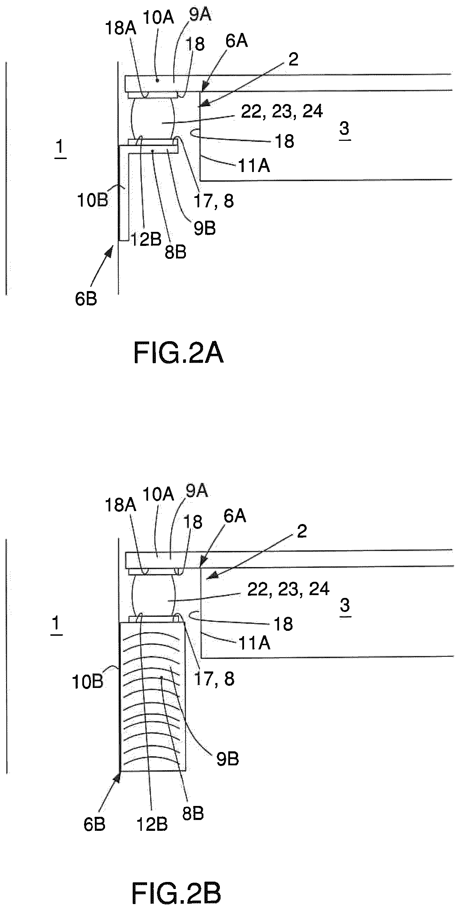

In another embodiment according to Fig. 2B, the vibration-damping device 2 is arranged between two parallel surfaces 17,18, the one parallel surface 17 accommodated in the wall block 1 and the second parallel surface 18 accommodated in the beam layout 3. The vibration-absorbing device 2 is mounted to one of the two surfaces 17,18 whereafter the beam layout 3 is placed with its parallel surface 18 against the wall block's parallel surface 17, whereby the vibration-absorbing device 2 is positioned between the surfaces.

According to Fig. 2D, the parallel surfaces 17, 18 can comprise a beam 19b of wood or metal or aluminium, which is mounted on the wall block's 1 surface 20. The beam 19 has a thickness, which is equal to or larger than the width of the vibration-damping device 2. Correspondingly, a similar beam 19a is mounted on the beam layout edge 16. Alternatively, the beam layout's 3 surface layer 21 in the form of a plate of laminated wood or thick building board projects outside the beam layout edge 16 according to Fig. 2A, whereby the protruding portion replaces the beam 19.

According to Fig. 3B, the vibration-damping device 2 is in its simplest form constituted by a piece of material 22 of a springy or resilient material, for example rubber, or by an elastomeric material, for example polyurethane. Alternatively, the piece of material can be replaced by a spiral spring 23, see Fig. 3A. Yet another alternative is to replace the piece of material by a so-called wave spring 24 as shown in an exemplified form in Fig. 3C. A wave spring comprises a single-turn or multi-turn ring 25 of a flat spring material, to which a wave form 26 is affixed along the entire ring. This gives a plurality of resilient and vibration-absorbing areas, which together can absorb vibrations in a relatively short extent of movement, which gives a reduced built-in height.

The vibration-damping device 2 is fixed onto the corbels 6A, 6B parallel surfaces 17, 18 according to Figs 1B and 3D by means of screws 27. A self-drilling screw is mounted first through the one side of the vibration-damping device to keep it in place on the one parallel surface 17, 18 of the first or second corbel 6A, 6B, before the beam layout is lifted into place. Subsequently, a second screw is screwed though the beam layout's 3 surface layer or board in the second side of the device in such a manner that the device is fixed without being able to be moved from the location.

Whether first or second corbels 6A, 6B or beams 19 are used in combination with a piece of material 22, a spiral spring 23 or wave spring 24, a spring plate 28 can advantageously be placed between the first and second parallel surfaces 17, 18 and the springs 22, 23, 24. A self-drilling screw 27 is subsequently screwed through the first and second corbel portion 6A, 6B and through the spring plate 28. In this manner, a fixed mounting laterally is obtained, but with full freedom of movement in height for the spring. In another embodiment, the spring plate 28 comprises a container with a so-called chemical anchor 29. When the screw is screwed in, the components of the chemical anchor are activated, whereafter the anchor hardens and locks the screw. In yet another variant, the chemical anchor, for example in the form of a two-component adhesive, can be injected under the spring plate before the screw is screwed in, whereafter the chemical anchor hardens through contact with air.

If a spiral spring 23 or a wave spring 24 is used, a spring guide can advantageously be used. The guide can comprise a sleeve or a short piece of pipe, which sleeve or piece of pipe is attached to one or both parallel surfaces, before the spring is placed above the sleeve or piece of pipe. The guide has been given a diameter, which is somewhat smaller than the spring, and in this way prevents the spring from being moved from the parallel surface, when the vibration-damping device is mounted.

The present invention is not limited to the description above and what is shown in the drawings, but can be amended and modified in a number of different ways within the scope of the following claims.

## Claims

1. A building comprising building elements (X) in the form of wall blocks (1) and a beam layout (3), wherein the wall blocks are stacked on each other with their end edges against each other, forming a wall (4), wherein in connection with a joint (5) between the wall blocks (1A, 1B), a beam layout (3) is placed, and a vibration-damping device (2) intended to be used to prevent spreading of vibration, also including sound, in such building comprising building elements (X) in the form of wall blocks (1) and beam layouts (3), wherein each vibration-damping device (2) comprises at least one springy construction (22,23,24) mounted between a wall block (1) and a beam layout (3) for absorbing vibrations occurring in the building, wherein the springy construction (22,23,24) is mounted between a surface (8) substantially parallel to the beam layout (3) and comprised in the wall block (1), and a surface (18) substantially in parallel with the wall block (1) and comprised in the beam layout (3), wherein the vibration damping device (2) comprises a first corbel construction (6A) mounted onto the beam layout (3), comprising a first portion (10A), which presents a substantially levelled surface (18A) comprised in the beam layout (3), a second corbel construction (6B) mounted onto the wall block (1) comprising a first portion (8B), which presents a substantially levelled/horizontally arranged surface (12B) comprised in the wall block (1), wherein the first corbel construction (6A) mounted onto the beam layout (3), comprises two portions connected to each other, wherein a first portion (9A) presents the substantially levelled surface (18A) comprised in the beam layout (3) and a second portion (11A) comprises a substantially upright/vertically arranged portion mounted at the beam layout (3) connected with the substantially levelled/horizontally arranged surface (18A), and the second corbel construction (6B, 13) mounted onto the wall block (1) comprises two portions connected to each other, wherein a first portion (9B) presents the substantially levelled/horizontally arranged surface (12B) comprised in the wall block (1) and a second portion (10B) of the corbel construction comprises a substantially upright/vertically arranged portion mounted at the wall block (1).

2. A building according to claim 1, wherein the springy construction comprises a spring (22,23,24).

3. A building according to claim 2, wherein the spring (22,23,24) comprises of one of the following; a piece of material (22) of a resilient material, for example rubber; a spiral spring (23); a wave spring (24); a spring plate (28).

4. A building according to claim 3, wherein the spring (22,23,24) is attached with a screw (27) through the respective levelled surfaces (18A, 12B) and the spring plate (28).

5. A building according to claim 1, wherein the springy construction comprises a container with a chemical anchor (29), which is activated, when the screw (27) is attached through the levelled surfaces (18A, 12B) and into the anchor (29).

6. A building according to claim 1, wherein the springy construction comprises a spring guide arranged on the one or both parallel plate surfaces, extending somewhat into the spring.

7. A building according to claim 6, wherein the spring guide comprises a sleeve, which is attached to the parallel surface.

## Patentansprüche

1. Gebäude, umfassend Gebäudeelemente (X) in Form von Wandblöcken (1) und eine Balkenanordnung (3), wobei die Wandblöcke so aufeinander gestapelt sind, dass ihre Endkanten aneinander aufliegen und eine Wand (4) bilden, wobei eine Balkenanordnung (3) in Verbindung mit einem Verbindungsglied (5) zwischen den Wandblöcken (1A, 1B) platziert ist und eine Schwingungsdämpfungsvorrichtung (2) dafür vorgesehen ist, verwendet zu werden, um ein Ausbreiten von Schwingung, auch einschließlich Geräuschen, in einem derartigen Gebäude zu verhindern, das Gebäudeelemente (X) in Form von Wandblöcken (1) und Balkenanordnungen (3) umfasst, wobei jede Schwingungsdämpfungsvorrichtung (2) mindestens eine federnde Konstruktion (22, 23, 24) umfasst, die zum Absorbieren von Schwingungen, die in dem Gebäude auftreten, zwischen einem Wandblock (1) und einer Balkenanordnung (3) montiert ist, wobei die federnde Konstruktion (22, 23, 24) zwischen einer Fläche (8), die im Wesentlichen parallel zu der Balkenanordnung (3) und in dem Wandbloch (1) enthalten ist, und einer Fläche (18) montiert ist, die im Wesentlichen parallel zu dem Wandblock (1) und in der Balkenanordnung (3) enthalten ist, wobei die Schwingungsdämpfungsvorrichtung (2) eine erste Auskragungskonstruktion (6A), die auf die Balkenanordnung (3) montiert ist und einen ersten Abschnitt (10A) umfasst, der eine im Wesentlichen ebene Fläche (18A) darstellt, die in der Balkenanordnung (3) enthalten ist, und eine zweite Auskragungskonstruktion (6B) umfasst, die auf den Wandblock (1) montiert ist und einen ersten Abschnitt (8B) umfasst, der eine im Wesentlichen ebene/horizontal angeordnete Fläche (12B) darstellt, die in dem Wandblock (1) enthalten ist, wobei die erste Auskragungskonstruktion (6A), die auf die Balkenanordnung (3) montiert ist, zwei Abschnitte umfasst, die miteinander verbunden sind, wobei ein erster Abschnitt (9A) die im Wesentlichen ebene Fläche (18A) darstellt, die in der Balkenanordnung (3) enthalten ist, und ein zweiter Abschnitt (11A) einen im Wesentlichen aufrechten/vertikal angeordneten Abschnitt umfasst, der an der Balkenanordnung (3) montiert ist und mit der im Wesentlichen ebenen/horizontal angeordneten Fläche (18A) verbunden ist und die zweite Auskragungskonstruktion (6B, 13), die auf den Wandblock (1) montiert ist, zwei Abschnitte umfasst, die miteinander verbunden sind, wobei eine erster Abschnitt (9B) die im Wesentlichen ebene/horizontal angeordnete Fläche (12B) darstellt, die in dem Wandblock (1) enthalten ist, und ein zweiter Abschnitt (10B) der Auskragungskonstruktion einen im Wesentlichen aufrechten/vertikal angeordneten Abschnitt umfasst, der an dem Wandblock (1) montiert ist.

2. Gebäude nach Anspruch 1, wobei die federnde Konstruktion eine Feder (22, 23, 24) umfasst.

3. Gebäude nach Anspruch 2, wobei die Feder (22, 23, 24) eines von Folgendem umfasst: einem Materialstück (22) aus einem elastischen Material, zum Beispiel Kautschuk; einer Spiralfeder (23); einer Wellenfeder (24); einer Federplatte (28).

4. Gebäude nach Anspruch 3, wobei die Feder (22, 23, 24) mit einer Schraube (27) durch die jeweiligen ebenen Flächen (18A, 12B) und die Federplatte (28) angebracht ist.

5. Gebäude nach Anspruch 1, wobei die federnde Konstruktion einen Behälter mit einem chemischen Anker (29) umfasst, der aktiviert ist, wenn die Schraube (27) durch die ebenen Flächen (18A, 12B) und in den Anker (29) angebracht ist.

6. Gebäude nach Anspruch 1, wobei die federnde Konstruktion eine Federführung umfasst, die an der einen oder beiden parallelen Plattenflächen angeordnet ist und sich etwas in die Feder erstreckt.

7. Gebäude nach Anspruch 6, wobei die Federführung eine Hülle umfasst, die an der parallelen Fläche angebracht ist.

## Revendications

1. Bâtiment comprenant des éléments de bâtiment (X) sous la forme de blocs de paroi (1) et d'un agencement de poutre (3), dans lequel les blocs de paroi sont empilés les uns sur les autres avec leurs bords d'extrémité les uns contre les autres, formant une paroi (4), dans lequel en liaison avec un joint (5) entre les blocs de paroi (1A, 1B), un agencement de poutre (3) est placé, et un dispositif d'amortissement de vibrations (2) destiné à être utilisé pour empêcher la propagation de vibrations, y compris également le son, dans un tel bâtiment comprenant des éléments de bâtiment (X) sous la forme de blocs de paroi (1) et d'agencements de poutre (3), dans lequel chaque dispositif d'amortissement de vibrations (2) comprend au moins une construction élastique (22,23,24) montée entre un bloc de paroi (1) et un agencement de poutre (3) pour absorber des vibrations se produisant dans le bâtiment, dans lequel la construction élastique (22,23,24) est montée entre une surface (8) sensiblement parallèle à l'agencement de poutre (3) et comprise dans le bloc de paroi (1), et une surface (18) sensiblement en parallèle avec le bloc de paroi (1) et comprise dans l'agencement de poutre (3), dans lequel le dispositif d'amortissement de vibrations (2) comprend une première construction de corbeau (6A) montée sur l'agencement de poutre (3), comprenant une première partie (10A), qui présente une surface sensiblement de niveau (18A) comprise dans l'agencement de poutre (3), une seconde construction de corbeau (6B) montée sur le bloc de paroi (1) comprenant une première partie (8B), qui présente une surface sensiblement de niveau/disposée horizontalement (12B) comprise dans le bloc de paroi (1), dans lequel la première construction de corbeau (6A) montée sur l'agencement de poutre (3), comprend deux parties reliées entre elles, dans lequel une première partie (9A) présente la surface sensiblement de niveau (18A) comprise dans l'agencement de poutre (3) et une seconde partie (11A) comprend une partie sensiblement droite/disposée verticalement montée sur l'agencement de poutre (3) reliée à la surface sensiblement de niveau/disposée horizontalement (18A), et la seconde construction de corbeau (6B, 13) montée sur le bloc de paroi (1) comprend deux parties reliées entre elles, dans lequel une première partie (9B) présente la surface sensiblement de niveau/disposée horizontalement (12B) comprise dans le bloc de paroi (1) et une seconde partie (10B) de la construction de corbeau comprend une partie sensiblement droite/disposée verticalement montée sur le bloc de paroi (1).

2. Bâtiment selon la revendication 1, dans lequel la construction élastique comprend un ressort (22, 23, 24).

3. Bâtiment selon la revendication 2, dans lequel le ressort (22, 23, 24) comprend l'un de ce qui suit ; un morceau de matériau (22) d'un matériau résilient, par exemple du caoutchouc ; un ressort hélicoïdal (23) ; un ressort ondulé (24) ; une plaque de ressort (28).

4. Bâtiment selon la revendication 3, dans lequel le ressort (22, 23, 24) est fixé avec une vis (27) à travers les surfaces de niveau respectives (18A, 12B) et la plaque de ressort (28).

5. Bâtiment selon la revendication 1, dans lequel la construction élastique comprend un récipient avec un ancrage chimique (29), qui est activé, lorsque la vis (27) est fixée à travers les surfaces de niveau (18A, 12B) et dans l'ancrage (29).

6. Bâtiment selon la revendication 1, dans lequel la construction élastique comprend un guide de ressort disposé sur l'une ou les deux surfaces de plaque parallèles, s'étendant quelque peu dans le ressort.

7. Bâtiment selon la revendication 6, dans lequel le guide de ressort comprend un manchon, qui est fixé à la surface parallèle.
